# EUROPÄISCHE PATENTSCHRIFT

(11) **EP 4 119 831 B1**
(45) Veröffentlichungstag und Bekanntmachung des Hinweises auf die Patenterteilung: **20.03.2024**
(21) Anmeldenummer: 22177854.1
(22) Anmeldetag: 08.06.2022
(51) Int. Cl.: F16L 55/179, F16L 41/14, F16L 55/165

(54) **ROHRLEITUNGSSANIERUNGSSYSTEM UND VERFAHREN ZUR SANIERUNG EINER ROHRLEITUNG**
PIPELINE SANITATION SYSTEM AND METHOD FOR REPAIRING A PIPELINE
SYSTÈME D'ASSAINISSEMENT DE TUYAUTERIE ET PROCÉDÉ D'ASSAINISSEMENT D'UNE TUYAUTERIE

(30) Priorität: 14.07.2021 DE 102021118206
(43) Veröffentlichungstag der Anmeldung: 18.01.2023
(73) Patentinhaber: Amex Sanivar AG, 4623 Neuendorf (CH)
(72) Erfinder: VOLLENBROICH, Maximilian, 40239 Düsseldorf (DE); HELFGEN, Darvin, 40470 Düsseldorf (DE)
(74) Vertreter: Ksoll, Peter

(56) Entgegenhaltungen:
- EP-A1- 0 795 712
- EP-A2- 0 931 639
- DE-A1-102019 110 315
- US-A1- 2020 132 234

## Beschreibung

Die Erfindung betrifft ein Rohrleitungssanierungssystem für eine Rohrleitung sowie ein Verfahren zur Sanierung einer Rohrleitung.

Die grabelose Rohrsanierung umfasst verschiedene Verfahren zur Reparatur beschädigter Rohrleitungen. Gängig ist das Einbringen von partiellen Linern, auch Kurzliner genannt, das Schlauchlining oder auch das Rohrstranglining. Hierbei werden die Rohrleitungen mit einer Sanierungsauskleidung versehen. Diese besteht aus einem mit Reaktionsharz getränkten Glasfaser- oder Filzschlauch oder einem mit Kunstharz getränkten Kunststoffschlauch. Den Verfahren ist gemein, dass in den Rohrleitungen bestehende Zuläufe oder Abgänge, beispielsweise Hausanschlüsse, durch die Sanierungsauskleidung verschlossen werden.

Sowohl bei der Kurzlinertechnik als auch bei der Inlinertechnik, ebenso wie beim Rohrstranglining müssen die Öffnungen in den Rohrleitungen zu Hausanschlüssen ausgefräst werden. Dies erfolgt üblicherweise ferngesteuert und robotergestützt.

Nachdem die Öffnung in die Sanierungsauskleidung hergestellt ist, muss eine zuverlässige und dichte Verbindung der Rohrleitung zu einer Hausanschlussleitung hergestellt werden.

Die Sanierung von insbesondere Wasser-Hausanschlüssen per Liningverfahren gestaltet sich als problematisch, da die Anbindung der Abgänge durch eine Öffnung im Liner erfolgen muss. Dies erfordert meist die externe Anbringung von Hausanschlusshülsen.

Durch die DE 20 2016 106 327 U1 zählt eine Bohrloch-Dichthülse einer Rohrleitungs-Anbohrarmatur und ein entsprechendes System aus einer Rohrleitungs-Anbohrarmatur mit einer solchen Bohrloch-Dichthülse zum Stand der Technik. Solche Anbohrarmaturen werden auf Rohrleitungen von außen aufgesetzt, um eine nachträgliche Anbohrung vornehmen zu können.

Die US 2020/0132234 A1 offenbart ein Anschlussstück zum Verbinden einer Abzweigleitung mit einer in einem Hauptrohr installierten Auskleidung. Das Anschlussstück weist einen Hülsenabschnitt auf zur Aufnahme in der Abzweigleitung, wobei die Befestigung über Befestigungselemente in Form von Zähnen erfolgt, die sich radial von der Außenseite des Hülsenabschnitts erstrecken. Die US 2009/0289451 A1 behandelt eine T-Muttern-Baugruppe zum Wiederherstellen einer abgedichteten Verbindung in einer ausgekleideten Rohrleitung.

Zum technologischen Hintergrund zählt eine in der US 1,887,423 A offenbarte Flanschkupplung für einen Tank.

Die DE102019110315 A1 offenbart eine Hausanschlussanordnung mit einer Hausanschlussarmatur, die an einer Rohrleitung festlegbar ist. Die Hausanschlussanordnung weist eine Bohrlochhülse, einen inneren Ausgleichskörper, einen äußeren Ausgleichskörper, eine Spannmutter, eine Kontermutter, ein Ventilgehäuse und ein am Ventilgehäuse montierbares Absperrventil auf. Die Bohrlochhülse besitzt einen Hülsenkörper mit einem ein Außengewinde aufweisenden Längenabschnitt. Die Bohrlochhülse ist unter Eingliederung des inneren Ausgleichskörpers mit dem Hülsenkörper durch eine Öffnung in der Rohrleitung geführt. Außenseitig der Rohrleitung ist der äußere Ausgleichskörper auf dem Hülsenkörper positioniert.

Der Erfindung liegt ausgehend vom Stand der Technik die Aufgabe zugrunde, ein funktional und bauteiltechnisch vorteilhaftes Rohrleitungssanierungssystem für eine mit einer Sanierungsauskleidung versehene Rohrleitung zu schaffen sowie ein verbessertes Verfahren zur Sanierung einer Rohrleitung aufzuzeigen.

Die Lösung des gegenständlichen Teils besteht in einem Rohrleitungssanierungssystem gemäß Anspruch 1.

Der verfahrensmäßige Teil der Aufgabe wird durch ein Verfahren nach Anspruch 10 gelöst.

Vorteilhafte Ausgestaltungen und Weiterbildungen der Erfindung sind Gegenstand der abhängigen Ansprüche.

Ausgestaltungen und Modifikationen von Merkmalen des Rohrleitungssanierungssystems, der Bauteile und der Bauteilanordnungen, ebenso wie der Hausanschlussanordnung des Rohrleitungssanierungssystems, welche einzeln oder in Kombination die Erfindung technisch vorteilhaft ausgestalten, ergeben sich aus der Beschreibung und den beigefügten Zeichnungen.

Das Rohrleitungssanierungssystem ist für die Sanierung von Rohrleitungen bestimmt, die mit einem Schlauchliner ausgekleidet sind. Eine solche Rohrleitung weist eine Anschlussöffnung auf, in welche eine Hausanschlussanordnung festlegbar ist. Die Hausanschlussanordnung weist ein Oberteil und ein Unterteil auf.

Erfindungsgemäß weist das Oberteil eine Grundplatte und einen Hülsenabschnitt auf. Zentrisch durch den Hülsenabschnitt erstreckt sich über dessen Länge ein Durchgang. Am Innenumfang des Hülsenabschnitts ist ein Innengewinde sowie eine Kammer mit einem Dichtring vorgesehen. Das Oberteil ist mit dem Hülsenabschnitt durch die Anschlussöffnung steckbar. Die Grundplatte ist zur Anlage an einen Innenwandbereich der Rohrleitung ausgebildet. Das Unterteil weist einen Hülsenkörper mit einem Außengewinde sowie einem Radialkragen auf, wobei zwischen dem Außengewinde und dem Radialkragen ein Sitz mit einer Dichtung vorgesehen ist.

Das Rohrleitungssanierungssystem ist anwendungstechnisch, funktional und insbesondere bauteiltechnisch verbessert. Die Hausanschlussanordnung des Rohrleitungssanierungssystems umfasst zwei Bauteile mit integrierten Dichtungen. Das Oberteil wird vor dem Durchzug des Sanierungsliners in das Altrohr eingeklebt. Hierzu wird das Oberteil mit dem Hülsenabschnitt durch eine vorhandene oder eine herzustellende Anschlussöffnung gesteckt und mit der Innenwand der zu sanierenden Rohrleitung verklebt. Für die Verklebung stehen wirksame und langlebige Klebstoffe zur Verfügung.

Nach dem Verkleben des Oberteils wird der Liner durchgezogen und installiert. Der Liner deckt das Oberteil der Hausanschlussanordnung auf der innerhalb der Rohrleitung liegenden Seite vollständig ab und haftet an der Unterseite des Oberteils. Diese Maßnahme unterstützt die Dichtheit zwischen der Rohrwand und dem Hülsenabschnitt des Oberteils.

Im nächsten Schritt wird der Liner durchbohrt und der Durchgang im Oberteil geöffnet. Hierzu wird das in der Anschlussöffnung eingeklebte und vom Liner abgedeckte Oberteil lokalisiert. Der Zugang zum Durchgang im Hülsenabschnitt des Oberteils wird dann maschinell, insbesondere unter Verwendung eines Roboters, hergestellt. Hierzu wird der Liner im Bereich des Durchgangs durchbohrt. Danach wird das Unterteil in das Oberteil geschraubt. Um den Spalt zwischen Liner und dem eingeschraubten Unterteil abzudichten, ist die innenseitige Dichtung vorgesehen. Die Dichtung ist zwischen dem Außengewinde und dem Radialkragen an bzw. in einem Sitz angeordnet.

Eine vorteilhafte Ausgestaltung des Oberteils sieht vor, dass die Kammer in einem Abschnitt zwischen dem Innengewinde und einem von der Grundplatte weg gerichteten Ende des Hülsenkörpers angeordnet ist. Die Kammer mit dem Dichtring ist folglich am bzw. im vom Inneren der Rohrleitung weg gerichteten Endabschnitt des Hülsenkörpers vorgesehen.

Weiterhin vorteilhaft ist der Sitz umlaufend am Radialkragen des Oberteils ausgebildet. Der Sitz ist insbesondere in einer Ringnut im Ringkragen ausgebildet. Diese Ausgestaltung gewährleistet einen vorteilhaften Sitz des Dichtrings am Unterteil zwischen dem Außengewinde und dem Radialkragen. Der Dichtring ist in dem Sitz bzw. der Ringnut gekammert. Vorteilhaft ist das umlaufende freie Ende des Radialkragens in Richtung zum Hülsenkörper umgestellt. In der Einbaulage der Hausanschlussarmatur bzw. des Unterteils weist das umlaufende Ende in Richtung zum in einer Rohrleitung installierten Schlauchliner.

Eine für die Praxis besonders vorteilhafte Ausgestaltung sieht vor, dass der Hülsenkörper einen sich an das Außengewinde anschließenden Längenabschnitt aufweist mit einer Dichtfläche am Außenumfang, die dazu bestimmt ist, mit der Dichtung am Oberteil zusammenzuwirken.

Eine weiterhin vorteilhafte Ausgestaltung sieht vor, dass das Unterteil zumindest eine Werkzeugansatzfläche aufweist. Das Unterteil kann über die Werkzeugansatzflächen mit einem Schraubwerkzeug, insbesondere einem robotisch geführten Manipulator, ergriffen und zweckgerichtet in den Hülsenabschnitt eingeschraubt werden. Dies erfolgt dosiert, wobei der Hülsenkörper des Unterteils in den Hülsenabschnitt des Oberteils eingeführt und das Außengewinde des Hülsenkörpers in das Innengewinde des Hülsenabschnitts eingeschraubt wird. Hierbei wird die Dichtfläche des Hülsenkörpers mit dem Dichtring des Oberteils in dichtende Anlage gebracht sowie ein Wandabschnitt des Schlauchliners zwischen dem Oberteil und dem Unterteil eingespannt, wobei die Dichtung des Unterteils gegen den Schlauchliner gepresst wird.

Besonders vorteilhaft ist die Werkzeugansatzfläche am Innenumfang des Hülsenkörpers vorgesehen. Eine praktische Ausgestaltung sieht vor, dass die Werkzeugansatzfläche durch eine Ausnehmung, beispielsweise eine Bohrung oder eine Nut, am Innenumfang des Hülsenkörpers ausgestaltet ist.

Die Grundplatte weist eine gekrümmt ausgebildete Anlagefläche auf, mit welcher die Grundplatte innenseitig am Innenumfang der zu sanierenden Rohrleitung anliegt. Die Grundplatte wird mit der zu sanierenden Rohrleitung verklebt. Dies erfolgt vollflächig, insbesondere über die konfigurativ auf den Innenumfang der Rohrleitung abgestimmte Anlagefläche. Weiterhin erfolgt eine Verklebung in der Anschlussöffnung in dem Ringspalt zwischen der Anschlussöffnung und dem durch die Anschlussöffnung ragenden Hülsenabschnitt.

Die Anlagefläche der Grundplatte kann eine die stoffschlüssige Fügung verbessernde Oberflächenprofilierung aufweisen.

Das Oberteil wird zunächst in die Anschlussöffnung und die Rohrleitung eingeklebt. Anschließend wird der Schlauchliner eingezogen. Hierbei wird die in der Rohrleitung liegende Seite bzw. Fläche des Oberteils vom Schlauchliner vollständig abgedeckt. Nach dem Öffnen der Durchgangsöffnung wird das Unterteil in das Oberteil eingeschraubt. Das Oberteil und das Unterteil sind dazu ausgebildet, zwischen sich einen Wandabschnitt des Schlauchliners einzuspannen.

Eine systemvorteilhafte Ausgestaltung sieht vor, dass das Oberteil ein Ortungselement aufweist. Durch das Ortungselement kann das in der Anschlussöffnung verklebte Oberteil lokalisiert werden. Es erfolgt eine Positionierung für das Ansetzen des Fräswerkzeugs zum Herstellen der Öffnung im Schlauchliner und dem Anschluss an die Anschlussöffnung.

Das Verfahren zur Sanierung einer Rohrleitung charakterisiert sich durch folgende Schritte:
- Lokalisieren einer vorhandenen Anschlussöffnung oder Herstellen einer Anschlussöffnung in der Rohrleitung;
- Bereitstellen eines Oberteils einer Hausanschlussanordnung, welches eine Grundplatte und einen Hülsenabschnitt aufweist und im Hülsenabschnitt eine Innengewinde sowie eine Kammer mit einem Dichtring vorgesehen ist;
- Einbringen des Oberteils unter Applikation eines Klebstoffs, wobei das Oberteil mit dem Hülsenabschnitt durch die Anschlussöffnung gesteckt und die Grundplatte mit einer Anlagefläche an einem die Anschlussöffnung umgebenden Innenwandbereich zur Anlage gebracht und das Oberteil mit der Rohrleitung verklebt wird;
- Einbringen eines Schlauchliners in die Rohrleitung und Auskleiden der Rohrleitung mit dem Schlauchliner, wobei eine in der Rohrleitung liegende Seite des Oberteils vom Schlauchliner abgedeckt wird;
- Herstellen einer Öffnung zum Durchgang im Hülsenabschnitt des Oberteils;
- Bereitstellen eines Unterteils der Hausanschlussanordnung, welches einen Hülsenkörper mit einem Außengewinde sowie einem Radialkragen aufweist und zwischen dem Außengewinde und dem Radialkragen ein Sitz mit einer Dichtung vorgesehen ist;
- Einschrauben des Unterteils in das Oberteil, wobei
- der Hülsenkörper des Unterteils in den Hülsenabschnitt des Oberteils geführt und das Außengewinde des Hülsenkörpers und das Innengewinde des Hülsenabschnitts in Eingriff gebracht werden sowie
- eine Dichtfläche des Hülsenkörpers mit dem Dichtring des Oberteils zur Anlage gelangt,
- ein Wandabschnitt des Schlauchliners zwischen dem Oberteil und dem Unterteil eingespannt wird und
- die Dichtung des Unterteils gegen den Schlauchliner gepresst wird.

Die Erfindung ist nachfolgend anhand von in den Zeichnungen dargestellten Ausführungsbeispielen ergänzend beschrieben. Es zeigen:
- Figur 1: eine Hausanschlussanordnung eines erfindungsgemäßen Rohrleitungssanierungssystems in einer perspektivischen Explosionsdarstellung;
- Figur 2: einen Schnitt durch das Oberteil der Hausanschlussanordnung;
- Figur 3: einen Schnitt durch das Unterteil der Hausanschlussanordnung;
- Figur 4: das Unterteil in einer perspektivischen Ansicht;
- Figur 5: das Oberteil und das Unterteil der Hausanschlussanordnung in einer schematisierten Schnittdarstellung;
- Figur 6: einen Ausschnitt einer zu sanierenden Rohrleitung;
- Figur 7: die Rohrleitung mit einem in einer Anschlussöffnung eingeklebten Oberteil der Hausanschlussanordnung;
- Figur 8: die Darstellung entsprechend der Figur 7 mit eingezogenem Schlauchliner und
- Figur 9: die Darstellung der Rohrleitung mit montierter Hausanschlussanordnung in einer Schnittdarstellung.

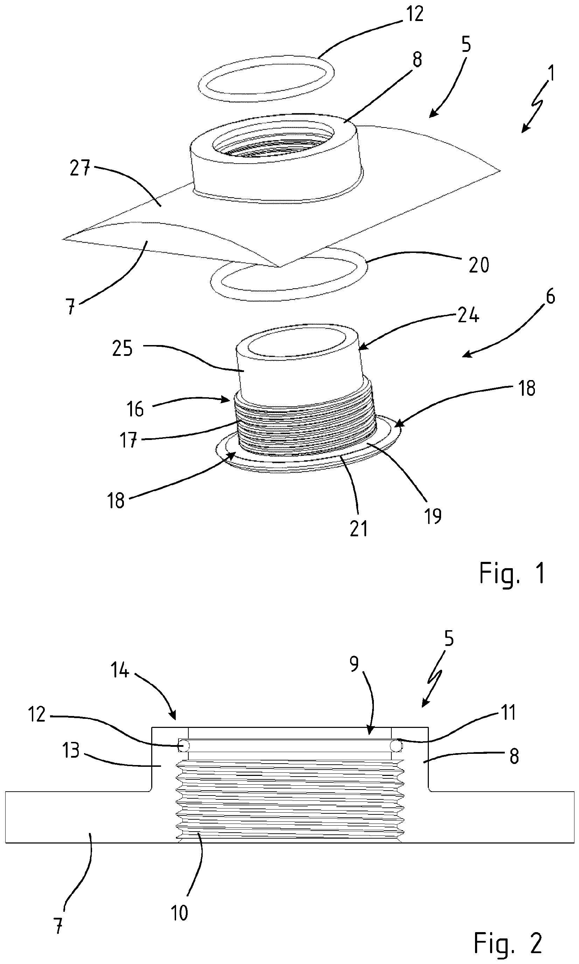

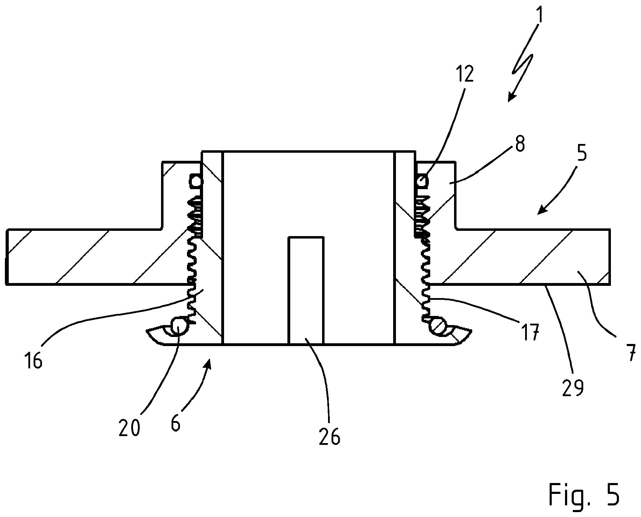

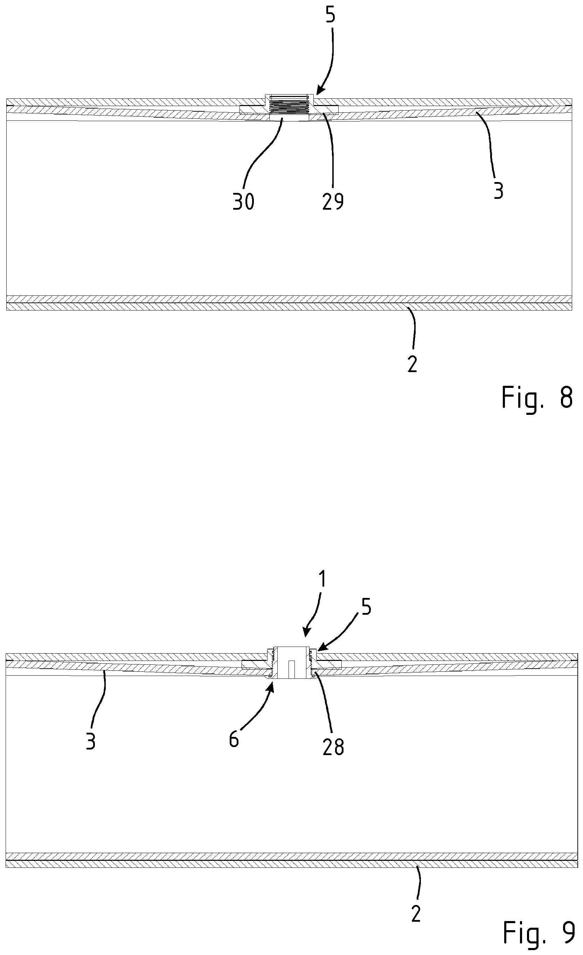

Anhand der Figuren 1 bis 9 ist ein erfindungsgemäßes Rohrleitungssanierungssystem und die dazugehörige Hausanschlussanordnung 1 sowie ein Verfahren zur Sanierung einer Rohrleitung 2 beschrieben.

In den Figuren werden für gleiche oder funktional einander entsprechende Bauteile bzw. Bauteilkomponenten die gleich Bezugszeichen verwendet.

Begriff wie oben und unten, horizontal und vertikal oder Innenseite und Außenseite, innenseitig oder außenseitig beziehen sich auf die Rohrleitung 2 und die Einbaulage der Hausanschlussarmatur 1 in der Rohrleitung 2. Richtungsangaben beziehen sich auf ein dreidimensionales kartesisches Koordinatensystem, um die Achsen innerhalb einer Rohrleitung 2 zu kennzeichnen. Der Ursprung des Koordinatensystems liegt im Rohrleitungsmittelpunkt. Die x-Achse entspricht der Längsachse der Rohrleitung 2, die y-Achse der Rohrleitungsquerachse und die z-Achse der Rohrleitungshochachse.

Das Rohrleitungssanierungssystem ist bestimmt für eine Rohrleitung 2, die mit einem Schlauchliner 3 ausgekleidet ist. Die Rohrleitung 2 weist eine Anschlussöffnung 4 auf, in welcher eine Hausanschlussanordnung 1 festlegbar ist.

Die Hausanschlussanordnung 1 weist ein Oberteil 5 und ein Unterteil 6 auf.

Das Oberteil 5 besitzt eine Grundplatte 7 und einen Hülsenabschnitt 8 mit einem Durchgang 9. Im Hülsenabschnitt 8 ist ein Innengewinde 10 sowie eine Kammer 11 vorgesehen. In der Kammer 11 ist ein Dichtring 12 eingegliedert. Die Kammer 11 ist in einem Abschnitt 13 zwischen dem Innengewinde 10 und einem von der Grundplatte 7 weg gerichteten Ende 14 des Hülsenabschnitts 8 angeordnet.

Das Oberteil 5 ist mit dem Hülsenabschnitt 8 durch die Anschlussöffnung 4 in der Rohrleitung 2 steckbar, wobei die Grundplatte 7 zur Anlage an einen Innenwandbereich 15 der Rohrleitung 2 ausgebildet ist.

Das Unterteil 6 weist einen Hülsenkörper 16 mit einem Außengewinde 17 sowie einen Radialkragen 18 auf. Unterhalb des Außengewindes 17 ist im Radialkragen 18 ein Sitz 19 für eine Dichtung 20 angeordnet. Der Sitz 19 ist in einer Ringnut 21 im Radialkragen 18 des Unterteils 6 ausgebildet. Die Ringnut 21 ist umlaufend um den Hülsenkörper 16 geführt auf der zum Hülsenkörper 16 gerichteten Seite des Radialkragens 18. Das umlaufende freie Ende 22 des Radialkragens 18 ist von dessen Unterseite 23 nach oben umgestellt in Richtung zum Hülsenkörper 16.

Der Hülsenkörper 16 weist einen sich an das Außengewinde 17 anschließenden Längenabschnitt 24 auf mit einer glatten Dichtfläche 25 am Außenumfang, die dazu bestimmt ist, mit dem Dichtring 12 im Oberteil 5 zusammenzuwirken.

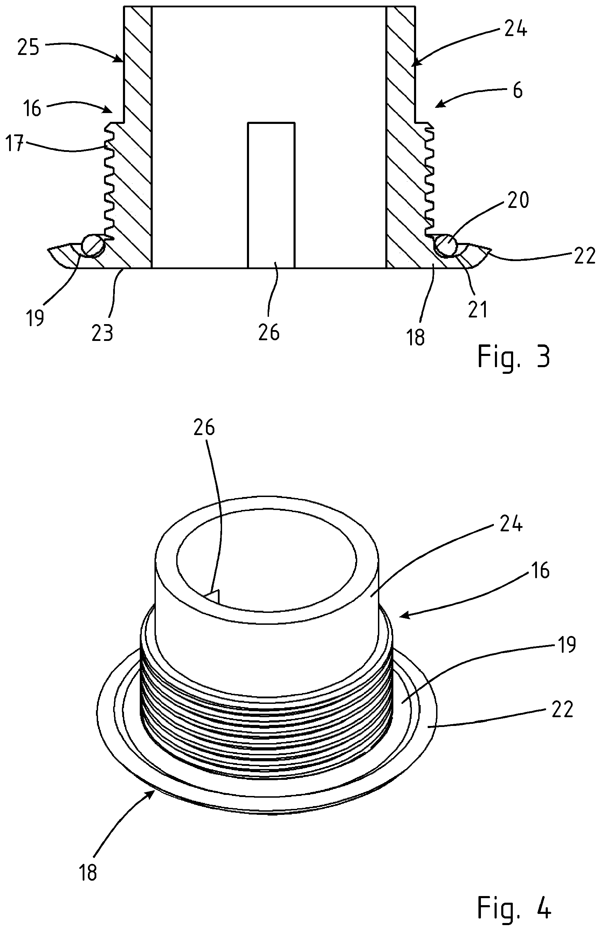

Insbesondere in der Figur 3 erkennt man, dass das Unterteil 6 eine Werkzeugansatzfläche 26 aufweist. Die Werkzeugansatzfläche 26 ist dazu ausgebildet und bestimmt, mit einem Schraubwerkzeug zusammenzuwirken, über welches das Unterteil 6 ergriffen und in das Oberteil 5 eingeschraubt werden kann. Die Werkzeugansatzfläche 26 ist am Innenumfang des Hülsenkörpers 16 vorgesehen.

Die Grundplatte 7 weist eine gekrümmt ausgebildete Anlagefläche 27 auf. Die Anlagefläche 27 ist auf den Radius einer Rohrleitung 2 bzw. den Innenwandbereich 15 der Rohrleitung 2 konturenmäßig abgestimmt.

Das Oberteil 5 und das Unterteil 6 sind dazu ausgebildet, zwischen sich einen Wandabschnitt 28 des Schlauchliners 3 einzuspannen.

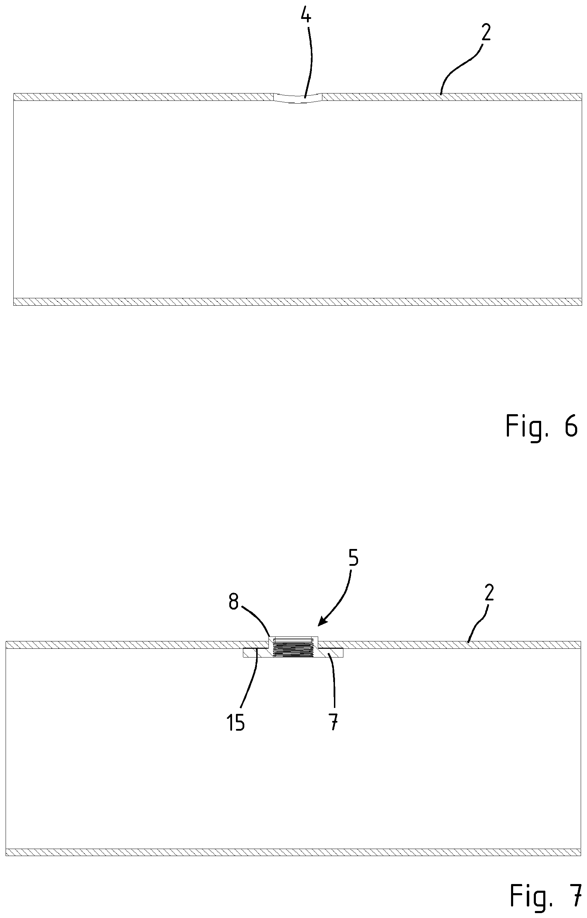

Anhand der Figuren 6 bis 9 ist der Ablauf der Sanierung einer Rohrleitung 2 nochmals erläutert. Die Rohrleitung 2 weist eine vorhandene oder eine herzustellende Anschlussöffnung 4 auf. Das Oberteil 5 wird mit dem Hülsenabschnitt 8 in die Anschlussöffnung 4 der Rohrleitung 2 gesteckt und mit der Rohrleitung 2 verklebt. Hierbei gelangt die Grundplatte 7 mit der Anlagefläche 27 an einem die Anschlussöffnung 4 umgebenden Innenwandbereich 15 der Rohrleitung 2 zur Anlage.

Danach wird der Schlauchliner 3 in die Rohrleitung 2 eingezogen und installiert. Hierbei wird die Rohrleitung 2 innenseitig vollständig mit dem Schlauchliner 3 ausgekleidet. Die in der Rohrleitung 2 liegende Unterseite 29 des Oberteils 5 wird vom Schlauchliner 3 abgedeckt.

Nach Installation des Schlauchliners 3 wird eine Öffnung 30 im Schlauchliner 3 zum Durchgang 9 im Hülsenabschnitt 8 des Oberteils 5 hergestellt. Dies erfolgt frästechnisch, insbesondere maschinell unter Nutzung eines Roboters. Zur Ortung des Oberteils 5 kann dieses mit einem Ortungselement ausgerüstet sein.

Als nächstes wird das Unterteil 6 der Hausanschlussanordnung 1 in das Oberteil 5 eingeschraubt. Hierzu wird der Hülsenkörper 16 mit dem Außengewinde 17 in den Hülsenabschnitt 8 des Oberteils 5 geführt und das Außengewinde 17 des Hülsenkörpers 16 und das Innengewinde 9 des Hülsenabschnitts 8 schraubtechnisch in Eingriff gebracht. Beim Einschrauben gelangt die Dichtfläche 25 des Hülsenkörpers 16 mit dem Dichtring 12 des Oberteils 5 in Anlage. Auf diese Weise wird ein Dichtsitz im oberen Bereich der Hausanschlussanordnung 1 zwischen der Dichtfläche 25 des Hülsenkörpers 16 und dem Dichtring 12 hergestellt. Bei der Schraubbewegung wird ein Wandabschnitt 28 des Schlauchliners 3 zwischen dem Oberteil 5 und dem Unterteil 6 eingespannt und die Dichtung 20 im Unterteil 6 gegen den Schlauchliner 3 gepresst. Auf diese Weise wird der Spalt zwischen dem Schlauchliner 3 und dem Unterteil 6 abgedichtet.

Das Rohrleitungssanierungssystem ist installiert und die mit dem Schlauchliner 3 ausgekleidete Rohrleitung 2 mit einer Hausanschlussanordnung 1 ausgerüstet und für den weiteren Hausanschluss vorbereitet.

### Bezugszeichen:

1 - Hausanschlussanordnung
2 - Rohrleitung
3 - Schlauchliner
4 - Anschlussöffnung
5 - Oberteil
6 - Unterteil
7 - Grundplatte
8 - Hülsenabschnitt
9 - Durchgang
10 - Innengewinde
11 - Kammer
12 - Dichtring
13 - Abschnitt
14 - Ende v. 8
15 - Innenwandbereich
16 - Hülsenkörper
17 - Außengewinde
18 - Radialkragen
19 - Sitz
20 - Dichtung
21 - Ringnut
22 - Ende v. 18
23 - Unterseite
24 - Längenabschnitt
25 - Dichtfläche
26 - Werkzeugansatzfläche
27 - Anlagefläche
28 - Wandabschnitt
29 - Unterseite v. 5
30 - Öffnung

## Patentansprüche

1. Rohrleitungssanierungssystem für eine Rohrleitung (2), die mit einem Schlauchliner (3) ausgekleidet ist und die Rohrleitung (2) eine Anschlussöffnung (4) aufweist, in welcher eine Hausanschlussanordnung (1) des Rohrleitungssanierungssystems festlegbar ist, wobei die Hausanschlussanordnung (1) ein Oberteil (5) und ein Unterteil (6) aufweist, **dadurch gekennzeichnet, dass** das Oberteil (5) eine Grundplatte (7) und einen Hülsenabschnitt (8) aufweist, wobei im Hülsenabschnitt (8) ein Innengewinde (10) sowie eine Kammer (11) mit einem Dichtring (12) vorgesehen ist, wobei das Oberteil (5) mit dem Hülsenabschnitt (8) durch die Anschlussöffnung (4) steckbar und die Grundplatte (7) zur Anlage an einen Innenwandbereich (15) der Rohrleitung (2) ausgebildet ist und das Unterteil (6) einen Hülsenkörper (16) mit einem Außengewinde (17) sowie einen Radialkragen (18) aufweist, wobei zwischen dem Außengewinde (17) und dem Radialkragen (18) ein Sitz (19) mit einer Dichtung (20) vorgesehen ist.

2. Rohrleitungssanierungssystem nach Anspruch 1, **dadurch gekennzeichnet, dass** die Kammer (11) in einem Abschnitt (13) zwischen dem Innengewinde (10) und einem von der Grundplatte (7) weg gerichteten Ende (14) des Hülsenabschnitts (8) angeordnet ist.

3. Rohrleitungssanierungssystem nach Anspruch 1 oder 2, **dadurch gekennzeichnet, dass** der Sitz (19) durch eine umlaufende Ringnut (21) im Radialkragen (18) ausgebildet ist.

4. Rohrleitungssanierungssystem nach einem der Ansprüche 1 bis 3, **dadurch gekennzeichnet, dass** der Hülsenkörper (16) einen sich an das Außengewinde (17) anschließenden Längenabschnitt (24) aufweist mit einer Dichtfläche (25) am Außenumfang, die dazu bestimmt ist, mit dem Dichtring (12) im Oberteil (5) zusammenzuwirken.

5. Rohrleitungssanierungssystem nach einem der Ansprüche 1 bis 4, **dadurch gekennzeichnet, dass** das Unterteil (6) zumindest eine Werkzeugansatzfläche (26) aufweist.

6. Rohrleitungssanierungssystem nach Anspruch 5, **dadurch gekennzeichnet, dass** die Werkzeugansatzfläche (26) am Innenumfang des Hülsenkörpers (16) vorgesehen ist.

7. Rohrleitungssanierungssystem nach einem der Ansprüche 1 bis 6, **dadurch gekennzeichnet, dass** die Grundplatte (7) eine gekrümmt ausgebildete Anlagefläche (27) aufweist.

8. Rohrleitungssanierungssystem nach einem der Ansprüche 1 bis 7, **dadurch gekennzeichnet, dass** das Oberteil (5) und das Unterteil (6) dazu ausgebildet sind, zwischen sich einen Wandabschnitt (28) des Schlauchliners (3) einzuspannen.

9. Rohrleitungssanierungssystem nach einem der Ansprüche 1 bis 8, **dadurch gekennzeichnet, dass** das Oberteil (5) ein Ortungselement aufweist.

10. Verfahren zur Sanierung einer Rohrleitung (2) mit folgenden Schritten:
- Lokalisieren einer vorhandenen Anschlussöffnung (4) oder Herstellen einer Anschlussöffnung (4) in der Rohrleitung (2);
- Bereitstellen eines Oberteils (5) einer Hausanschlussanordnung (1), welches eine Grundplatte (7) und einen Hülsenabschnitt (8) aufweist und im Hülsenabschnitt (8) ein Innengewinde (10) sowie eine Kammer (11) mit einem Dichtring (12) vorgesehen ist;
- Einbringen des Oberteils (5) unter Applikation eines Klebstoffs, wobei das Oberteil (5) mit dem Hülsenabschnitt (8) durch die Anschlussöffnung (4) gesteckt und die Grundplatte (7) mit einer Anlagefläche (27) an einem die Anschlussöffnung (4) umgebenden Innenwandbereich (15) zur Anlage gebracht und das Oberteil (5) mit der Rohrleitung (2) verklebt wird;
- Einbringen eines Schlauchliners (3) in die Rohrleitung (2) und Auskleiden der Rohrleitung (2) mit dem Schlauchliner (3), wobei eine in der Rohrleitung (2) liegende Unterseite (29) des Oberteils (5) vom Schlauchliner (3) abgedeckt wird;
- Herstellen einer Öffnung (30) im Schlauchliner (3) zum Durchgang (9) im Hülsenabschnitt (8) des Oberteils (5);
- Bereitstellen eines Unterteils (6) der Hausanschlussanordnung (1), welches einen Hülsenkörper (16) mit einem Außengewinde (17) sowie einem Radialkragen (18) aufweist und zwischen dem Außengewinde (17) und dem Radialkragen (18) ein Sitz (19) mit einer Dichtung (20) vorgesehen ist;
- Einschrauben des Unterteils (6) in das Oberteil (5), wobei
- der Hülsenkörper (16) des Unterteils (6) in den Hülsenabschnitt (8) des Oberteils (5) geführt und das Außengewinde (17) des Hülsenkörpers (16) und das Innengewinde (10) des Hülsenabschnitts (8) in Eingriff gebracht werden sowie
- eine Dichtfläche (25) des Hülsenkörpers (16) mit einem Dichtring (12) des Oberteils (5) zur Anlage gelangt,
- ein Wandabschnitt (28) des Schlauchliners (3) zwischen dem Oberteil (5) und dem Unterteil (6) eingespannt wird und
- die Dichtung (20) des Unterteils (6) gegen den Schlauchliner (3) gepresst wird.

## Claims

1. Pipeline repairing system for a pipeline (2), which is lined with a hose liner (3), and the pipeline (2) has a connection opening (4) in which a house connection arrangement (1) of the pipeline repairing system can be fixed, wherein the house connection arrangement (1) comprises an upper part (5) and a lower part (6), **characterised in that** the upper part (5) has a base plate (7) and a sleeve section (8), wherein an internal thread (10) and a chamber (11) with a sealing ring (12) are provided in the sleeve section (8), wherein the upper part (5) with the sleeve section (8) can be inserted through the connection opening (4), and the base plate (7) is configured to bear against an inner wall section (15) of the pipeline (2), and the lower part (6) has a sleeve body (16) with an external thread (17) and a radial collar (18), wherein a seat (19) with a seal (20) is provided between the external thread (17) and the radial collar (18).

2. Pipeline repairing system according to claim 1, **characterised in that** the chamber (11) is arranged in a section (13) between the internal thread (10) and an end (14) of the sleeve section (8) directed away from the base plate (7).

3. Pipeline repairing system according to claim 1 or 2, **characterised in that** the seat (19) is formed by a circumferential annular groove (21) in the radial collar (18).

4. Pipeline repairing system according to any one of claims 1 to 3, **characterised in that** the sleeve body (16) has a longitudinal section (24) adjoining the external thread (17) with a sealing surface (25) on the outer circumference, which is intended to cooperate with the sealing ring (12) in the upper part (5).

5. Pipeline repairing system according to any one of claims 1 to 4, **characterised in that** the lower part (6) has at least one tool attachment surface (26).

6. Pipeline repairing system according to claim 5, **characterised in that** the tool attachment surface (26) is provided on the inner circumference of the sleeve body (16).

7. Pipeline repairing system according to any one of claims 1 to 6, **characterised in that** the base plate (7) has a curved contact surface (27).

8. Pipeline repairing system according to any one of claims 1 to 7, **characterised in that** the upper part (5) and the lower part (6) are configured to clamp a wall section (28) of the hose liner (3) between them.

9. Pipeline repairing system according to any one of claims 1 to 8, **characterized in that** the upper part (5) has a locating element.

10. Method for restoring a pipeline (2) comprising the following steps:
- locating an existing connection opening (4) or creating a connection opening (4) in the pipeline (2);
- providing an upper part (5) of a house connection arrangement (1), which has a base plate (7) and a sleeve section (8) and an internal thread (10) and a chamber (11) are provided with a sealing ring (12) in the sleeve section (8);
- inserting the upper part (5) with the application of an adhesive, wherein the upper part (5) with the sleeve section (8) is inserted through the connection opening (4) and the base plate (7) is brought into contact with a contact surface (27) on an inner wall section (15) surrounding the connection opening (4) and the upper part (5) is adhered to the pipeline (2);
- inserting a hose liner (3) into the pipeline (2) and lining the pipeline (2) with the hose liner (3), wherein a lower side (29) of the upper part (5) lying in the pipeline (2) is covered by the hose liner (3);
- producing an opening (30) in the hose liner (3) to the passage (9) in the sleeve section (8) of the upper part (5);
- providing a lower part (6) of the house connection arrangement (1), which has a sleeve body (16) with an external thread (17) and a radial collar (18) and a seat (19) with a seal (20) is provided between the external thread (17) and the radial collar (18);
- screwing the lower part (6) into the upper part (5), wherein
- the sleeve body (16) of the lower part (6) is guided into the sleeve section (8) of the upper part (5) and the external thread (17) of the sleeve body (16) and the internal thread (10) of the sleeve section (8) are brought into engagement and
- a sealing surface (25) of the sleeve body (16) comes into contact with a sealing ring (12) of the upper part (5),
- a wall section (28) of the hose liner (3) is clamped between the upper part (5) and the lower part (6) and
- the seal (20) of the lower part (6) is pressed against the hose liner (3).

## Revendications

1. Système d'assainissement des canalisations pour une canalisation (2), qui est revêtue d'une gaine (3) et la canalisation (2) présente une ouverture de raccordement (4), dans laquelle un agencement de raccordement domestique (1) du système d'assainissement des canalisations peut être fixé, dans lequel l'agencement de raccordement domestique (1) présente une partie supérieure (5) et une partie inférieure (6), **caractérisé en ce que** la partie supérieure (5) présente une plaque de base (7) et une section de douille (8), dans lequel dans la section de douille (8) est prévu un filetage intérieur 10), ainsi qu'une chambre (11) avec une bague d'étanchéité 12), dans lequel la partie supérieure (5) peut être enfichée avec la section de douille (8) à travers l'ouverture de raccordement (4) et la plaque de base (7) est conçue pour prendre appui sur une zone de paroi interne (15) de la canalisation (2) et la partie inférieure (6) présente un corps de douille (16) avec un filetage extérieur (17), ainsi qu'une collerette radiale (18), dans lequel un siège (19) avec un joint d'étanchéité (20) est prévu entre le filetage extérieur (17) et la collerette radiale (18).

2. Système d'assainissement des canalisations selon la revendication 1, **caractérisé en ce que** la chambre (11) est disposée dans une section (13) entre le filetage intérieur (10) et une extrémité orientée dans une direction qui s'éloigne de la plaque de base (7) de la section de douille (8).

3. Système d'assainissement des canalisations selon la revendication 1 ou 2, **caractérisé en ce que** le siège (19) est conçu à travers une rainure annulaire périphérique (21) dans la collerette radiale (18).

4. Système d'assainissement des canalisations selon l'une quelconque des revendications 1 à 3, **caractérisé en ce que** le corps de douille (16) présente une section longitudinale (24) se raccordant au filetage extérieur (17) avec une surface d'étanchéité (25) sur la périphérie extérieure, qui est destinée à interagir avec la bague d'étanchéité (12) dans la partie supérieure (5).

5. Système d'assainissement des canalisations selon l'une quelconque des revendications 1 à 4, **caractérisé en ce que** la partie inférieure (6) présente au moins une surface d'épaulement d'outil (26).

6. Système d'assainissement des canalisations selon la revendication 5, **caractérisé en ce que** la surface d'épaulement d'outil (26) est prévu sur la périphérie intérieure du corps de douille (16).

7. Système d'assainissement des canalisations selon l'une quelconque des revendications 1 à 6, **caractérisé en ce que** la plaque de base (7) présente une surface d'appui (27) conçue de manière incurvée.

8. Système d'assainissement des canalisations selon l'une quelconque des revendications 1 à 7, **caractérisé en ce que** la partie supérieure (5) et la partie inférieure (6) sont conçues pour serrer entre elles une section de paroi (28) de la gaine (3).

9. Système d'assainissement des canalisations selon l'une quelconque des revendications 1 à 8, **caractérisé en ce que** la partie supérieure (5) présente un élément de localisation.

10. Procédé d'assainissement d'une canalisation (2) comprenant les étapes suivantes :
- la localisation d'une ouverture de raccordement (4) existante ou la fabrication d'une ouverture de raccordement (4) dans la canalisation (2) ;
- la fourniture d'une partie supérieure (5) d'un agencement de raccordement domestique (1), qui présente une plaque de base (7) et une section de douille (8) et un filetage intérieur (10), ainsi qu'une chambre (11) avec une bague d'étanchéité (12) sont prévus dans une section de douille (8) ;
- l'introduction de la partie supérieure (5) en appliquant un adhésif, dans lequel la partie supérieure (5) avec la section de douille (8) est insérée à travers l'ouverture de raccordement (4) et la plaque de base (7) avec une surface d'appui (27) est amenée de manière à prendre appui sur une zone de paroi intérieure (15) entourant l'ouverture de raccordement (4) et la partie supérieure (5) est collée à la canalisation (2) ;
- l'introduction d'une gaine (3) dans la canalisation (2) et le revêtement de la canalisation (2) avec la gaine (3), dans lequel un côté inférieur (29) se trouvant dans la canalisation (2) de la partie supérieure (5) est recouvert de la gaine (3) ;
- la fabrication d'une ouverture (30) dans la gaine (3) pour le passage (9) dans la section de douille (8) de la partie supérieure (5) ;
- la fourniture d'une partie inférieure (6) de l'agencement de raccordement domestique (1), qui présente un corps de douille (16) avec un filetage extérieur (17), ainsi qu'une collerette radiale (18) et un siège (19) avec un joint d'étanchéité (20) est prévu entre le filetage extérieur (17) et la collerette radiale (18) ;
- le vissage de la partie inférieure (6) dans la partie supérieure (5), dans lequel
- le corps de douille (16) de la partie inférieure (6) est guidé dans la section de douille (8) de la partie supérieure (5) et le filetage extérieur (17) du corps de douille (16) et le filetage intérieur (10) de la section de douille (8) sont mis en prise, ainsi que
- une surface d'étanchéité (25) du corps de douille (16) venant prendre appui avec une bague d'étanchéité (12) de la partie supérieure (5),
- une section de paroi (28) de la gaine (3) est serrée entre la partie supérieure (5) et la partie inférieure (6) et
- le joint d'étanchéité (20) de la partie inférieure (6) est comprimé contre la gaine (3).
